(19) Europäisches Patentamt
European Patent Office
Office européen des brevets

(11) EP 1 004 620 B1

(12) # EUROPÄISCHE PATENTSCHRIFT

(45) Veröffentlichungstag und Bekanntmachung des Hinweises auf die Patenterteilung:
**09.03.2005 Patentblatt 2005/10**

(51) Int Cl.⁷: **C08K 3/34**

(21) Anmeldenummer: **00103338.0**

(22) Anmeldetag: **01.03.1993**

(54) **Thermoplastische Formmassen mit Magnesium-Aluminium-Silikat**

Thermoplastic moulding compositions containing magnesium-aluminum-silikates

Masses à mouler contenant des silicates magnésium-aluminium

(84) Benannte Vertragsstaaten:
**DE FR GB IT**

(30) Priorität: **13.03.1992 DE 4208108**

(43) Veröffentlichungstag der Anmeldung:
**31.05.2000 Patentblatt 2000/22**

(62) Dokumentnummer(n) der früheren Anmeldung(en) nach Art. 76 EPÜ:
**93103215.5 / 0 560 160**

(73) Patentinhaber: **Bayer MaterialScience AG**
**51368 Leverkusen (DE)**

(72) Erfinder:
- **Eckel, Thomas, Dr.**
  **41540 Dormagen (DE)**
- **Wittmann, Dieter, Dr.**
  **51375 Leverkusen (DE)**
- **Ott, Karl-Heinz, Dr.**
  **51375 Leverkusen (DE)**
- **Wulff, Claus, Dr.**
  **47800 Krefeld (DE)**
- **Freitag, Dieter, Dr.**
  **47802 Krefeld (DE)**

(56) Entgegenhaltungen:
**DE-A- 2 137 271**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 004 620 B1

Printed by Jouve, 75001 PARIS (FR)

## Beschreibung

Die Erfindung betrifft thermoplastische Formmassen enthaltend eine Mischung aus thermoplastischen Polymeren, niedermolekularen Additiven und speziellen Magnesium-Aluminium-Silikaten.

Thermoplastische Polymere und Mischungen verschiedener thermoplastischer Polymerer spielen als Konstruktionswerkstoffe in der Technik eine bedeutende Rolle. Die meisten dieser Polymerzusammensetzungen enthalten neben Restmonomeren, Restlösungsmitteln und Oligomeren niedermolekulare Additive, die ihnen bestimmte Eigenschaften verleihen, z.B. Stabilisatoren, Farbstoffe, Entformungsmittel, Flammschutzmittel, Antistatika.

Solche niedermolekularen Additive treten wegen ihrer Flüchtigkeit bei den üblichen Verarbeitungstemperaturen (meist 200 bis 350°C), teilweise aus den thermoplastischen Zusammensetzungen aus, verlieren ihre Wirkung und verursachen Qualitätseinbußen wie Oberflächenstörungen an den Formteilen, Belagbildung an den Spritzgußwerkzeugen, Geruchsbelästigungen.

Es wurde gefunden, dass speziell vorbereitete Magnesium-Aluminium-Silikate niedermolekulare Additive in Polymeren soweit binden können, dass diese bei der Verarbeitung nicht ausdampfen. diese Trägermaterialien beeinflussen die Eigenschaften thermoplastischer Polymerer nicht negativ, so dass z.B. die Zähigkeit nur geringfügig zurückgeht, die Oberflächenqualität erhalten bleibt und die Wärmeformbeständigkeit sowie die Beständigkeit gegenüber Chemikalien verbessert wird. Auch Flammschutzmittel, die im allgemeinen in größerer Menge eingesetzt werden müssen, verbleiben bei Verarbeitungstemperaturen im Polymeren und können im Brandfalle ihre Wirksamkeit voll entfalten.

Gegenstand der Erfindung sind thermoplastische Formmassen enthaltend:

A. 100 Gew.-Teile einer Mischung enthaltend thermoplastisches Homopolymer oder Copolymer von ethylenisch ungesättigten Monomeren und ein Polymer von bifunktionellen reaktiven Verbindungen,

B. 0,1 bis 40, vorzugsweise 0,5 bis 20 Gew.-Teile eines Additives mit einem Molekulargewicht kleiner 2000 g/Mol, vorzugsweise kleiner 1000 g/Mol,
und

C. 0,1 bis 50, vorzugsweise 0,5 bis 15 Gew.-Teile eines Magnesium-Aluminium-Silikates mit einem Schüttgewicht <1 $g/cm^3$, vorzugsweise <0,5 $g/cm^3$, besonders bevorzugt <0,2 $g/cm^3$ und einem Teilchendurchmesser von 1 bis 5000 μm, vorzugsweise von 3 bis 500 μm, besonders bevorzugt von 5 bis 100 μm und einem Gehalt an Übergangsmetallverbindungen von 0 bis 5 Gew.-%, vorzugsweise 0 bis 1 Gew.-%, besonders bevorzugt 0 bis 0,5 Gew.-%.

### <u>Thermoplastische Polymere A</u>

Thermoplastische Polymere A sind Mischungen enthaltend Homopolymere oder Copolymere von ethylenisch ungesättigten Monomeren und Polymeren aus bifunktionellen reaktiven Verbindungen.

Das thermoplastische Polymer A umfasst Homopolymere oder Copolymere von einem oder mehreren ethylenisch ungesättigten Monomeren (Vinylmonomeren) wie beispielsweise Ethylen, Propylen, Vinylacetat, Styrol, α-Methylstyrol, kernsubstituierte Styrole, Acrylnitril, Methacrylnitril, Methylmethacrylat, Maleinsäureanhydrid, N-substituierte-Maleinimide, Chloropren, Butadien-1,3, Isopropen sowie $C_1$-$C_1$8-Alkylacrylate und -Methacrylate.

Als Vinylpolymerisate kommen in Frage:

- kautschukfreie Vinylpolymerisate (A.1)
- kautschukhaltige Vinylpolymerisate wie Pfropfpolymerisate von Vinylmonomeren auf einen Kautschuk (A.2)
- Mischungen aus kautschukfreien und kautschukhaltigen Vinylpolymerisaten.

Die Copolymeriste A.1 sind harzartig, thermoplastisch und kautschukfrei.

Bevorzugte Vinyl-Copolymerisate A.1 sind solche aus einerseits Styrol, α-Methylstyrol, kernsubstituiertem Styrol oder Mischungen (A.1.1) und andererseits Acrylnitril, Methacrylnitril, Methylmethacrylat, Maleinsäureanhydrid, N-substituiertes Maleinimid oder Mischungen (A,1,2).

Besonders bevorzugt enthalten die Copolymerisate A.1 50 bis 98 Gew.-% A.1.1 und 50 bis 2 Gew.-% A.1.2.

Besonders bevorzugte Copolymerisate A.1 sind solche aus Styrol, Acrylnitril und gegebenenfalls Methylmethacrylat, aus α-Methylstyrol, Acrylnitril und gegebenenfalls Methylmethacrylat sowie aus Styrol, α-Methylstyrol, Acrylnitril und gegebenenfalls Methylmethacrylat.

Die Styrol-Acrylnitril-Copolymerisate A.1 sind bekannt und lassen sich durch radikalische Polymerisation, insbesondere durch Emulsions-, Suspensions-, Lösungsoder Massepolymerisation herstellen. Die Copolymerisate A, 1 besitzen vorzugsweise Molekulargewichte $\overline{M}_w$ (Gewichtsmittel, ermittelt durch Lichtstreuung oder Sedimentation)

von 15.000 bis 200.000.

Weitere besonders bevorzugte Copolymerisate A.1 sind statistisch aufgebaute Copolymerisate aus Styrol und Maleinsäureanhydrid, die bevorzugt durch eine kontinuierliche Masse- oder Lösungspolymerisation bei unvollständigen Umsätzen aus dem entsprechenden Monomeren hergestellt werden. Ihre Zusammensetzung kann innerhalb weiter Grenzen variiert werden. Bevorzugt enthalten sie 5 bis 25 Gew.-% Maleinsäureanhydrideinheiten.

Anstelle von Styrol können die Polymeren auch kernsubstituierte Styrole, wie p-Methylstyrol, Vinyltoluol, 2,4-Dimethylstyrol und andere substituierte Styrole, wie α-Methylstyrol, enthalten.

Ihre Molekulargewichte (Zahlenmittel Rn) sind bevorzugt 60.000 bis 200.000. Bevorzugt besitzen sie eine Grenzviskosität von 0,3 bis 0,9 (gemessen in Dimethylformamid bei 25°C; siehe hierzu Hoffmann, Krömer, Kuhn, Polymeranalytik I, Stuttgart, 1977, Seite 316 ff.)

Die Vinylpolymerisate A.2 sind thermoplastisch und kautschukhaltig. Bevorzugte Vinylpolymerisate A.2 stellen Pfropfpolymerisate dar. Diese umfassen z.B. Pfropfcopolymerisate mit kautschukelastischen Eigenschaften, die im wesentlichen aus mindestens zwei der folgenden Monomeren erhältlich sind: Chloropren, Butadien-1,3, Isopropen, Styrol, Acrylnitril, Ethylen, Propylen, Vinyl-acetat und $C_1$-$C_{18}$-Alkylacrylale und -methacrylate. Solche Polymerisate sind z.B. in "Methoden der Organischen Chemie" (Houben-Weyl), Bd. 14/1, Georg Thieme-Verlag, Stuttgart, 1961, S. 393-406 und in C.B. Bucknall, "Toughened Plastics", Appl. Science Publishers, London 1977, beschrieben. Bevorzugte Polymerisate A.2 sind partiell vernetzt und besitzen Gelgehalte von über 20 Gew.-%, vorzugsweise über 40 Gew.-%, insbesondere über 60 Gew.-%.

Bevorzugte Vinylpolymerisate A.2 sind Pfropfpolymerisate aus:

A.2.1 5 bis 95, vorzugsweise 30 bis 80, Gew.-Teilen, einer Mischung aus

A.2.1.1 50 bis 95 Gew.-Teilen Styrol, α-Methylstyrol, halogen- oder methylkernsubstituierten Styrolen, Methylmethacrylat oder Mischungen dieser Verbindungen und

A.2.1.2 5 bis 50 Gew.-Teilen Acrylnitril, Methacrylnitril, Methylmethacrylat, Maleinsäuranhydrid, $C_1$-$C_4$-alkyl- bzw. phenyl-N-substituierten Maleinimiden oder Mischungen dieser Verbindungen auf

A.2.2 5 bis 95, vorzugsweise 20 bis 70, Gew.-Teile Kautschuk-Polymerisat mit einer Glasübergangstemperatur unter -10°C.

Bevorzugte Pfropfpolymerisate A.2 sind z.B. mit Styrol und/oder Acrylnitril und/oder Alkylacrylaten oder -Methacrylaten gepfropfte Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butandien/Acrylnitril-Copolymerisate, Polyisobutene oder Polyisoprene, wie sie z.B. in der DE-OS 2 348 377 (= US-PS 3 919 353) beschrieben sind.

Besonders bevorzugte Polymerisate A.2 sind ABS-Polymerisate, wie sie z.B. in der DE-OS 2 035 390 (= US-PS 3 644 574) oder in der DE-OS 2 248 242 (= GB-PS 1 409 275) beschrieben sind.

Besonders bevorzugte Pfropfpolymerisate A.2 sind erhältlich durch Pfropfpolymerisation von

α. 10 bis 70, vorzugsweise 15 bis 50, insbesondere 20 bis 40 Gew.-%, bezogen auf Pfropfpolymerisat A.2, von Acrylsäureestern oder Methacrylsäureestern oder von 10 bis 70, vorzugsweise 15 bis 50, insbesondere 20 bis 40 Gew.-% eines Gemisches aus 10 bis 50, vorzugsweise 20 bis 35 Gew,-%; bezogen auf Gemisch, Acrylnitril, Acrylsäureester oder Methacrylsäureester und 50 bis 90, vorzugsweise 65 bis 80 Gew.-%, bezogen auf Gemisch, Styrol (α stellt die Pfropfmonomeren A 2.1 des Pfropfpolymersats A.2 dar) auf

β. 30 bis 90, vorzugsweise 50 bis 85, insbesondere 60 bis 80 Gew.-%, bezogen auf Pfropfpolymerisat A.2, eines Butadien-Polymerisats mit mindestens 50 Gew.-%, bezogen auf β, Butadienresten (β stellt die Pfropfgrundlage A. 2.2 des Pfropypolymers A.2 dar),

wobei vorzugsweise der Gelanteil der Pfropfgrundlage β mindestens 70 Gew.-% (in Toluol gemessen), der Pfropfgrad G 0,15 bis 0,55 und der mittlere Teilchendurchmesser $d_{50}$ des Pfropfpolymerisats A.2 0,05 bis 2 µm, vorzugsweise 0,1 bis 0,6 µm beträgt.

Acrylsäureester bzw. Methacrylsäureester unter α sind Ester der Acrylsäure oder Methacrylsäure und einwertiger Alkohole mit 1 bis 18 C-Atomen. Besonders bevorzugt sind Methylmethacrylat, Ethylmethacrylat, Propylmethacrylat, n-Butylacrylat, t-Butylacrylat und t-Butylmethacrylat.

Das Butadienpolymerisat β kann neben Butadienresten bis zu 50 Gew.-%, bezogen auf β, Reste anderer ethylenisch ungesättigter Monomerer, wie Styrol, Acrylnitril, $C_1$-$C_4$-Alkylester oder Acryl- oder Methyacrylsäure (wie

Methylacrylat, Ethylacrylat, Methylmethacrylat, Ethylmethacrylat), Vinylester und/oder Vinylether) enthalten, Bevorzugt ist Polybutadien.

Bei der Pfropfpolymerisation werden die Pfropfmonomeren bekanntlich nicht vollständig auf die Pfropfgrundlage polymerisiert; erfindungsgemäß schließen Pfropfpolymerisate A.2 aber Produkte ein, die durch Polymerisation der Pfropfmonomere in Gegenwart der Pfropfgrundlage gewonnen werden.

Der Pfropfgrad G ist das Gewichtsverhältnis von aufgepfropten Pfropfmomomeren zur Pfropfgrundlage (Dimensionslose Zahl).

Der mittlere Teilchendurchmesser $d_{50}$ ist der Durchmesser, oberhalb und unterhalb dessen jeweils 50 Gew.-% der Teilchen liegen. Er kann mittels Ultrazentrifugenmessung (w. Scholtan, H. Lange, Kolloid, Z. und Z. Polymere 250 (1972), 782-796) bestimmt werden.

Weitere besonders bevorzugte Polymerisate A.2 sind Pfropfpolymerisate aus

τ. 20 bis 90 Gew.-%, bezogen auf A.2, Acrylatkautschuk mit einer Glasübergangstemperatur unter -20°C (entspricht der Pfropfgrundlage A.2.2 des Pfropfpolymers A.2) und

δ. 10 bis 80 Gew.-%, bezogen auf A.2, mindestens eines polymerisierbaren, ethylenisch ungesättigten Monomeren, dessen bzw. deren in Abwesenheit von 1. entstandenen Homo- bzw. Copolymerisate eine Glasübergangstemperatur über 25°C hätten, (entspricht dem Pfropfmonomeren A.2.1. des Pfropfpolymers A.2).

Die Acrylatkautschuke τ der Polymerisate A.2 sind vorzugsweise Polymerisate aus Acrylsäurealkylestern, gegebenenfalls mit bis zu 40 Gew.-%, bezogen auf τ, anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethyl-hexylester; Halogenalkylester, vorzugsweise Halogen-$C_1$-$C_8$-alkyl-ester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykol-dimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf die Pfropfgrundlage τ.

Bei cyclischen vernetzenden Monomeren mit mindestens 3 ethylenisch ungesättigten Gruppen ist es vorteilhaft, die Menge auf unter 1 Gew.-% der Pfropfgrundlage τ zu beschränken.

Bevorzugte "andere" polymerisierbare, ethylenisch ungesättigte Monomere, die neben den Acrylsäureestern gegebenenfalls zur Herstellung der Pfropfgrundlage T dienen können, sind z.B. Acrylnitril, Styrol, α-Methylstyrol, Acrylamide, Vinyl-$C_1$-$C_6$-Alkylether, Methylmethacrylat, Butadien. Bevorzugte Acrylatkautschuke als Pfropfgrundlage τ sind Emulsionspolymerisate, die einen Gelgehalt von mindestens 60 Gew.-% aufweisen.

Weitere geeignete Pfropfgrundlagen gemäß A.2.2 sind Silikonkautschuke mit pfropfaktiven Stellen, wie sie in DE-OS 37 04 657, DE-OS 37 04 655, DE-OS 36 31 540 und DE-OS 36 31 539 beschrieben werden.

Der Gelgehalt der Pfropfgrundlage A.2.2 wird bei 25°C in Dimethylformamid bestimmt (M. Hoffmann, H. Krömer, R. Kuhn, Polymeranalytik I und II, Georg-Thieme-Verlag, Stuttgart 1977).

Die Pfropfpolymerisate A. 2 können nach bekannten Verfahren wie Masse-, Suspensions-, Emulsions- oder Masse-Suspensionsverfahren hergestellt werden.

Die thermoplastischen Polymere A können auch Polymere sein, die durch Polykondensation aus mindestens einer reaktiven Verbindung hergestellt worden sind, wie beispielsweise Polycarbonate, Polyester, Polysulfone, Polyethersulfone, Polyimide, Polyetherimide, Polyetherketone, Polyarylensulfide, Polyamide und Polyurethane.

Bevorzugte Polycarbonate sind solche auf Basis der Diphenole der Formel (I)

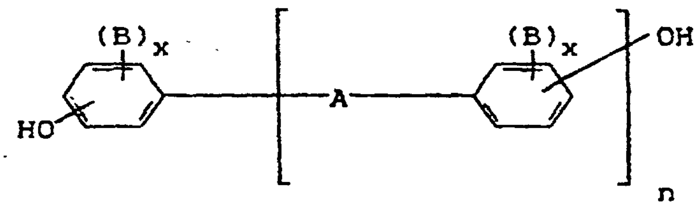 (I),

worin

A eine Einfachbindung, ein $C_1$-$C_5$-Alkylen, ein $C_2$-$C_5$-Alkyliden, ein $C_5$-$C_6$-Cycloalkyliden, -S- oder -$SO_2$-,

B Chlor, Brom

X 0, 1 oder 2 und

n 1 oder 0 sind.

Erfindungsgemäß geeignete Polycarbonate sind sowohl Homopolycarbonate als auch Copolycarbonate.

A kann auch eine Mischung der vorstehend definierten thermoplastischen Polycarbonate sein.

Polycarbonate können in bekannter Weise aus Diphenolen mit Phosgen nach dem Phasengrenzflächenverfahren oder mit Phosgen nach dem Verfahren in homogener Phase, dem sogenannten Pyridinverfahren, hergestellt werden, wobei das Molekulargewicht in bekannter Weise durch eine entsprechende Menge an bekannten Kettenabbrechern eingestellt werden kann.

Geeignete Kettenabbrecher sind z.B. Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 (Le A 19 006) oder Monoalkylphenol bzw. Dialkylphenol mit insgesamt 8-20 C-Atomen in den Alkylsubstituenten gemäß deutscher Patentanmeldung P 3 506 472.2 (Le A 23 654), wie 3,5-ditert.-Butylphenol, p-iso-Octylphenol, p-tert.-Octylphenol, p-Dodecylphenol und 2-(3,5-Dimethyl-heptyl)-phenol und 4-(3,5-Dimethyl-heptyl)-phenol.

Die Menge an Kettenabbrechern beträgt im allgemeinen zwischen 0,5 und 10 Mol-%, bezogen auf die Summe der jeweils eingesetzten Diphenole (I).

Die erfindungsgemäß geeigneten Polycarbonate A haben mittlere Molekulargewichte ($\overline{M}w$, Gewichtsmittel, gemessen z.B. durch Ultrazentrifugation oder Streulichtmessung) von 10 000 bis 200 000, vorzugsweise von 20 000 bis 80 000.

Geeignete Diphenole der Formel (I) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dibrom-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Bevorzugte Diphenole sind auch alkylsubstituierte Dihydroxydiphenylcycloalkane der Formel (II),

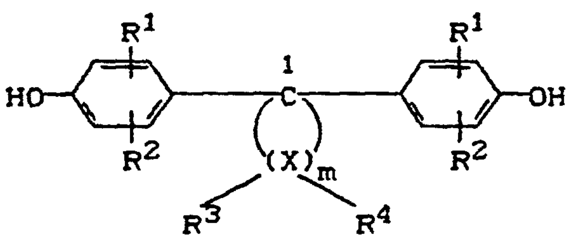 (II)

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$ für jedes X individuell wählbar, unabhängig voneinander Wasserstoff oder $C_1$-$C_6$-Alkyl

und

X Kohlenstoff bedeuten,
mit der Maßgabe, daß an mindestens einem Atom X $R^3$ und $R^4$ gleichzeitig Alkyl bedeuten.

Die erfindungsgemäß geeigneten Polycarbonate A können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, z.B. solchen mit drei oder mehr als drei phenolischen Gruppen.

Bevorzugte Polycarbonate sind neben dem Bisphenol-A-Homopolycarbonat die Copolycarbonate von Bisphenol A mit bis zu 15 Mol-%, bezogen auf die Mol-Summen an Diphenolen, an 2,2-Bis-(3,5-dibrom-4-hydroxyphenyl)-propan.

Die Polycarbonate A können teilweise oder vollständig durch aromatische Polyestercarbonate ersetzt werden.

Bevorzugte Polyester A sind Polyalkylenterephthalate. Diese sind Reaktionsprodukte von aromatischen Dicarbonsäuren (oder ihren reaktionsfähigen Derivaten, z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen und cycloaliphatischen Diolen mit 2 bis 10 C-Atomen nach bekannten Methoden herstellen (Kunststoff-Handbuch), Band VIII, S. 695 ff, Carl Hanser Verlag, München 1973).

Bevorzugte Polyalkylenterephthalate enthalten 80 bis 100, vorzugsweise 90 bis 100 Mol-%, bezogen auf die Dicarbonsäurekomponente, Terephthalsäurereste und 80 bis 100, vorzugsweise 90 bis 100 Mol-%, bezogen auf die Diolkomponente, Ethylenglykol und/oder Butandiol-1,4-Reste. Neben Terephthalsäureresten sind 0 bis 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacin-, Azelain- oder Cyclohexandiessigsäure. Neben Ethylenglykol- und/oder Butandiol-1,4-Resten sind 0 bis 20 Mol% anderer aliphatischer Diole mit 3 bis 12 C-Atomen oder cycloaliphatischer Diole mit 6 bis 12 C-Atomen enthalten, z.B. Reste von Pentandiol-1,5, Hexandiol-1,6, Cyclohexandimethanol-1,4, 3-Methylpentandiol-1,3 und -1,6, 2-Ethylhexandiol-1,3, 2,2-Diethylpropandiol-1,3, Hexandiol-2,5, 1-4-Di(β-hydroxyethoxyphenyl)-propan, 2,4-Dihydroxy-1,1,3,3-tetramethylcyclobutan, 2,2-Bis-(3-ß-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate können durch Einbau relativ kleiner Mengen 3- oder 4-wertiger Alkohole oder 3- oder 4-basiger Carbonsäuren, wie sie in DE-OS 1 900 270 und US-PS 3 692 744 beschrieben sind, verzweigt werden. Beispiele bevorzugter Verzweigungsmittel sind Trimesinsäure, Trimellithsäure, Trimethylolethan und -propan und Pentraerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure (oder deren reaktionsfähigen Derivaten, z.B. deren Dialkylestern) und Ethandiol und/oder Butandiol-1,4 hergestellt worden sind sowie deren Mischungen.

Bevorzugte Polyalkylenterephthalate sind auch Copolyester, die aus mindestens zwei der obengenannten Diole hergestellt sind; besonders bevorzugte Copolyester sind Poly-(ethylenglykol/butandiol-1,4)-terephthalate. In den Copolyestern können die verschiedenen Diolreste in Form von Blöcken oder statistisch verteilt vorliegen.

Die Polyalkylenterephthalate besitzen im allgemeinen eine Intrinsic-Viskosität von 0,4 bis 1,4 dl/g, vorzugsweise 0,5 bis 1,3 dl/g, insbesondere 0,6 bis 1,2 dl/g, jeweils gemessen in Phenol/o-Dichlorbenzol (1:1 Gew.-Tl.) bei 25°C.

Geeignete aromatische Polysulfone und Polyethersulfone sind bevorzugt lineare, thermoplastische Polyarylenpolyethersulfone, in welchen die Aryleneinheiten über Ether- und Sulfongruppen verbunden sind. Man erhält sie durch Umsetzung eines Alkalimetalldoppelsalzes eines zweiwertigen Phenols (Bisphenols) mit einer zwei Halogenatome enthaltenden benzoiden Verbindung, wobei mindestens einer der beiden Reaktanten eine Sulfongruppe (-$SO_2$-) enthalten muß. Polyethersulfone sowie ihre Herstellung sind bekannt (vgl. US-PS 3 264 536, GB-PS 1 264 900, EP-A 0 038 028).

Die erfindungsgemäßen Polyethersulfone A enthalten wiederkehrende Einheiten der Formel (III)

-O-Z-O-W- (III)

worin

Z den Rest eines zweiwertigen Phenols und

W den Rest der benzoiden Verbindung mit einer inerten, elektronenanziehenden Gruppe bedeutet und

wobei Z und W durch aromatische Kohlenstoffatome über Valenzbindungen an die Sauerstoffatome gebunden sind und mindestens einer der Reste Z und W eine Sulfongruppe zwischen aromatischen Kohlenstoffatomen besitzt.

Bevorzugte Diphenole für die Herstellung der aromatischen Polyethersulfone A sind Verbindungen der Formel (IV)

HO-Z-OH (IV)

worin Z einen zweiwertigen, ein- oder mehrkernigen aromatischen Rest mit 6-30 C-Atomen bedeutet, und die beiden OH-Gruppen direkt an C-Atome gebunden sind.

Besonders bevorzugte Diphenole entsprechen der Formel (V)

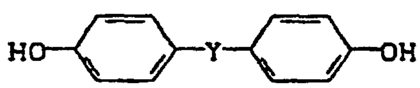

(V)

in der

Y eine Einfachbindung, einen Alkylen- oder Alkylidenrest mit 1-7 C-Atomen, einen Cycloalkylen- oder Cycloalkylidenrest mit 5-12 C-Atomen, -O-, -S-,

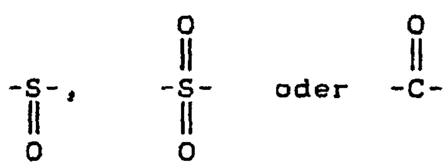

bedeutet sowie deren kernalkylierte und kernhalogenierte Derivate.

Beispiele für Diphenole sind:

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-ether,
Bis-(hydroxyphenyl)-sulfoxide,
Bis-(hydroxyphenyl)-sulfone und
$\alpha,\alpha'$-Bis-(hydroxyphenyl)-diisopropylbenzole und entsprechende kernalkylierte und kernhalogenierte Derivate.

Die wichtigsten Diphenole sind: Bisphenol A, Tetramethylbisphenol A, 1,1-Bis-(4-hydroxyphenyl)-isobutan, 1,1-Bis-(4-hydroxy-phenyl)cyclohexan, 4,4'-Dihydroxybiphenyl, 4,4'-Dihydroxydiphenyl-sulfid, 4,4'-Dihydroxydiphenylsulfon sowie deren di- und tetrahalogenierte und alkylierte Derivate. Besonders bevorzugt ist Bisphenol A. Es können auch beliebige Mischungen der genannten Diphenole verwendet werden.

Bevorzugte aromatische Dihalogenverbindungen sind zweikernige Verbindungen der Formel (VI)

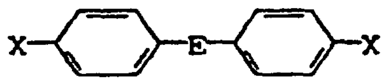

(VI)

Darin bedeuten:

X Halogen (F, Cl, Br, I) und

E zweiwertige elektronenanziehende Gruppen, wie Sulfon-, Carbonyl-, Vinyl-, Sulfoxid- oder Azo-Gruppen.

Jeder der beiden Benzolringe kann mit einem oder mehreren gesättigten Kohlenwasserstoffresten oder elektronenanziehenden Gruppen substituiert sein.

Bevorzugte aromatische Dihalogenverbindungen (VI) sind 4,4'-Dichlordiphenylsulfon und 4,4'-Dichlorbenzophenon.

Die aromatischen Polyethersulfone können auch verzweigt sein. Geeignete Verzweigungsmittel sind die für die Herstellung von aromatischen Polyestern (DE-OS 2 940 024) und für die Hertellung von aromatischen Polyetercarbonaten (DE-OS 3 007 934) bekannten.

Als Kettenabbrecher bei der Herstellung der aromatischen Polyethersulfone A werden vorzugsweise Phenol, Alkylphenole mit $C_1$-$C_{12}$-Alkylgruppen und halogenierte Phenole sowie Bromide und Chloride von $C_1$-$C_{10}$-Alkanen in Mengen von 0,1 bis 10 Mol-% (im Falle von Phenolen bezogen auf Diphenole, im Falle von Chloriden bezogen auf die aromatischen Dihalogen-Verbindungen) verwendet.

Die reduzierten Viskositäten ($\eta_{red}$) der aromatischen Polyethersulfone A liegen im Bereich von 0,15 bis 1,5 dl/g vorzugsweise von 0,35 bis 0,65 dl/g (gemessen an Lösungen von 20 mg Polyethersulfon A in 10 ml $CHCl_3$ bei 25°C).

Bevorzugte Polyarylensulfide bestehen im wesentlichen aus Phenyleneinheiten, die über Sulfidgruppen aneinander gebunden sind, gemäß Formel (VII),

$$(\text{-Ar-S-})_n \qquad \text{(VII)}$$

in der Ar ein substituierter oder unsubstituierter Phenylrest und n wenigstens 50 ist. Geeignete Ausgangsverbindungen und Herstellungsverfahren sind beispielsweise in den US-Patentschriften 3 354 129 und 3 919 177 beschrieben.

Die Polyphenylensulfide können in linearer, verzweigter oder vernetzter Form vorliegen.

Üblicherweise werden zur Herstellung von Polyarylensulfiden polyhalogenierte aromatische Verbindungen mit schwefelhaltigen Verbindungen in polaren organischen Lösungsmitteln, gegebenenfalls in Gegenwart von Katalysatoren, umgesetzt.

Geeignete polyhalogenierte aromatische Verbindungen zur Synthese der Polyarylensulfide sind beispielsweise 1,2-Dichlorbenzol, 1,3-Dichlorbenzol, 1,4-Dichlorbenzol, 2,5-Dichlortoluol, 1,4-Dibrombenzol, 2,5-Dibromanilin und andere sowie deren Mischungen. Sollen verzweigte Polyarylensulfide hergestellt werden, müssen mindestens 0,05 Mol-% der polyhalogenierten aromatischen Verbindungen Tri- oder Tetrahalogenaromaten, wie beispielsweise 1,2,4-Trichlorbenzol, 1,3,5-Trichlorbenzol oder 1,2,4,5-Tetrachlorbenzol sein.

Geeignete schwefelhaltige Verbindungen zur Synthese der Polyarylensulfide sind Alkalisulfide wie beispielsweise Natrium- oder Kaliumsulfid. Vorzugsweise werden auch die Hydrate dieser Alkalisulfide eingesetzt. Die Alkalisulfide können auch aus Hydrogensulfiden mit Hilfe von Alkalihydroxiden wie Lithiumhydroxid, Natriumhydroxid oder Kaliumhydroxid erzeugt werden.

Als polare Lösungsmittel sind beispielsweise N-Methylpyrrolidon, N-Ethylpyrrolidon, N-Methylcaprolactam, N-Ethylcaprolactam oder 1,3-Dimethylimidazolidinon geeignet.

Als Katalysatoren können Substanzen wie beispielsweise Alkalifluoride, Alkaliphosphate oder Alkalicarboxylate in Mengen von 0,02 bis 1,0 Mol pro Mol Alkalisulfid eingesetzt werden.

Additive B

Geeignete niedermolekulare Additive können Stabilisatoren, Farbstoffe, Entformungsmittel, Antistatika oder Flammschutzmittel sein, die den thermoplastischen Polymeren in den üblichen Mengen zugesetzt werden.

Die erfindungsgemäßen Additive sind niedermolekular, d.h. sie weisen Molekulargewichte kleiner 2000 g/mol, vorzugsweise kleiner 1000 g/mol auf.

Bevorzugte Additive B im Sinne der Erfindung sind Flammschutzmittel. Dabei sind sowohl halogenhaltige als auch halogenfreie Verbindungen geeignet.

Vorzugsweise als Halogenverbindungen geeignet sind organische Chlor- und/oder Bromverbindungen, die bei der Herstellung und Verarbeitung der erfindungsgemäßen Formmassen stabil sind, so daß keine korrosiven Gase freigesetzt werden und die Wirksamkeit dadurch nicht beeinträchtigt wird.

Bevorzugte Additive B sind beispielsweise

1. Chlorierte und bromierte Diphenyle, wie Octachlordiphenyl, Decachlordiphenyl, Octabromdiphenyl, Decabromdiphenyl.
2. Chlorierte und bromierte Diphenylether, wie Octaund Decachlordiphenylether und Octa- und Decabromdiphenylether.
3. Chloriertes und bromiertes Phthalsäureanhydrid und seine Derivate, wie Phthalimide und Bisphthalimide, z.B. Tetrachlor- und Tetrabromphthalsäureanhydrid, Tetrachlor- und Tetrabromphthalimid, N,N'-Ethylenbis-tetrachlor- und N,N'-Ethylen-bis-tetrabromphthalimid, N-Methyltetrachlor- und N-Methyltetrabromphthalimid.
4. Chlorierte und bromierte Bisphenole, wie 2,2-Bis-(3,5-di-chlor-4-hydroxyphenyl)-propan und 2,2-Bis-(3,5-di-brom-4-hydroxyphenyl)-propan.
5. 2,2-Bis-(3,5-di-chlor-4-hydroxyphenyl)-propan-Oligocarbonat und 2,2-Bis-(3,5-di-brom-4-hydroxyphenyl)-propan-Oligocarbonat mit einem mittleren Polykondensationsgrad von 2-20.

Bromverbindungen werden gegenüber den Chlorverbindungen bevorzugt.

Besonders bevorzugte Flammschutzadditive stellen halogenfreie Verbindungen dar.

Als Additive B geeignet sind alle üblicherweise als Flammschutzmittel einsetzbaren Phosphorverbindungen, insbesondere Phosphinoxide und Derivate von Säuren des Phosphors und Salze von Säuren und Säurederivaten des Phosphors.

Bevorzugt werden Derivate von Säuren des Phosphors und deren Salze, wobei darunter im Sinne der vorliegenden Erfindung Derivate (beispielsweise Ester) der Phosphorsäure, Phosphonsäure, Phosphinsäure, phosphorigen Säure, auch jeweils in dehydratisierter Form, sowie Alkali-, Erdalkali- und Ammoniumsalze dieser Säuren bzw. deren Derivate (beispielsweise teilveresterter Säuren) zu verstehen sind.

Besonders bevorzugte Phosphorverbindungen sind solche der Formel (VIII)

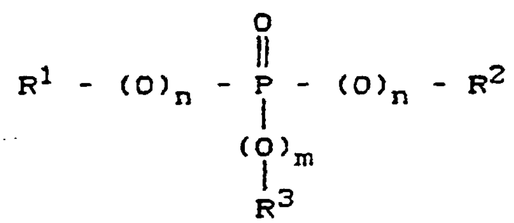

(VIII)

in denen $R^1$, $R^2$ und $R^3$ unabhängig voneinander ein gegebenenfalls halogeniertes $C_1$-$C_8$-Alkyl oder ein gegebenenfalls halogeniertes und/oder alkyliertes $C_5$- oder $C_6$-Cycloalkyl oder ein gegebenenfalls halogeniertes und/oder alkyliertes und/oder aralkyliertes $C_6$-$C_{30}$-Aryl, und "n" und "m" unabhängig voneinander 0 oder 1 sind.

Derartige Phosphorverbindungen sind generell bekannt (siehe beispielsweise Ullmann, Enzyklopädie der technischen Chemie, Band 18, Seiten 301 ff, 1979). Die aralkylierten Phosphorverbindungen sind beispielsweise in der DE-OS 38 24 356.0 beschrieben.

Gegebenenfalls halogenierte $C_1$-$C_8$-Alkylreste gemäß (VIII) können einfach oder mehrfach halogeniert, linear oder verzweigt sein. Beispiele für Alkylreste sind Chlorethyl, 2-Chlorpropyl, 2,3-Dibrompropyl, Butyl, Methyl oder Octyl.

Gegebenenfalls halogenierte und/oder alkylierte $C_5$- oder $C_6$-Cycloalkyle gemäß (VIII) sind gegebenenfalls einfach bis mehrfach halogenierte und/oder alkylierte $C_5$- oder $C_6$-Cycloalkyle, also z.B. Cyclopentyl, Cyclohexyl, 3,3,5-Trimethylcyclohexyl und vollchloriertes Cyclohexyl.

Gegebenenfalls halogenierte und/oder alkylierte und/oder aralkylierte $C_6$-$C_{30}$-Arylreste gemäß (VIII) sind gegebenenfalls ein oder mehrkernig, einfach oder mehrfach halogeniert und/oder alkyliert und/oder aralkyliert, z.B. Chlorphenyl, Bromphenyl, Pentachlorphenyl, Pentabromphenyl, Phenyl, Kresyl, Isopropylphenyl, benzylsubstituiertes Phenyl und Naphthyl.

Erfindungsgemäß einsetzbare Phosphorverbindungen gemäß Formel (VIII) sind z.B. Tributylphosphat, Tris-(2-chlorethyl)phosphat, Tris-(2,3-dibrompropyl)phosphat, Triphenylphosphat, Trikresylphosphat, Diphenylkresylphosphat, Diphenyloctylphosphat, Diphenyl-2-ethylkresylphosphat, Tri-(isopropylphenyl)phosphat, Tris-(p-benzylphenyl)phosphat, Triphenylphosphinoxid, Methanphosphonsäuredimethylester, Methanphosphonsäuredipenthylester und Phenylphosphonsäurediethylester.

Geeignete Flammschutzmittel sind auch dimere und oligomere Phosphate, deren Molekulargewicht kleiner 2000 g/Mol, vorzugsweise kleiner 1000 g/Mol ist. Diese sind beispielsweise in der euroäpischen Anmeldung EP-A 0 363 608 beschrieben.

Magnesium-Aluminium-Silikate C

Silikate C im Sinne der Erfindung sind Magnesium-Aluminium-Silikate. Diese zur Gruppe der Glimmerminerale gehörenden Silikate bestehen aus dünnen, flachen Plättchen und zeichnen sich durch Kristallwassergehalte > 5 % aus.

Damit diese Silikate als anorganische Trägermaterial für Additive in thermoplastischen Polymeren wirksam sind, müssen mehrere spezielle Vorbereitungsschritte durchlaufen werden:

A) Bei hohen Temperaturen, vorzugsweise zwischen 700 und 1100°C, wird das Silikat durch das verdampfende Kristallwasser expandiert. Dabei vergrößert sich das Volumen um das 10- bis 30-fache und es entstehen innere Hohlräume. Das Schüttgewicht des Aluminium-Silikats wird vom Ausgangsniveau im Bereich 2 bis 3 $g/cm^3$ auf Werte < 0,5 $g/cm^3$, insbesondere < 0,2 $g/cm^3$ erniedrigt.

B) Das expandierte Silikat wird mit Säuren, vorzugsweise Salzsäure oder Schwefelsäure, behandelt, um störende Übergangsmetallverbindungen wie beispielsweise Oxide oder Hydroxide von Eisen, Mangan, Chrom oder anderen zu entfernen. Je nach Polymeren kann z.B. die Basizität oder Lewis-Säure-Aktivität stören, bei praktisch allen Polymeren ist eine Eigenfarbe des Trägermaterials unerwünscht.

Um eine Beeinträchtigung der thermoplastischen Polymere zu vermeiden, ist es erforderlich, die Menge an Übergangsmetallverbindungen auf < 5 %, vorzugsweise < 1 %, insbesondere < 0,5 % zu reduzieren.

Die Teilchen der speziell vorbehandelten Silikate sollen vorzugsweise Durchmesser von 3 bis 500 µm, insbesondere von 5 bis 100 µm haben. Sind die Teilchen kleiner, dann verliert das Material die Fähigkeit zur Adsorption niedermolekularer Verbindungen, sind sie größer, dann werden die mechanischen Eigenschaften der Formmassen beeinträchtigt.

Die erfindungsgemäßen Formmassen können zusätzlich höhermolekulare Additive, Glasfaser oder Polymere, die nicht thermoplastisch verarbeitbar sind wie beispielsweise Polytetrafluorethylen, in den üblichen Mengen enthalten.

Die erfindungsgemäßen Formmassen können hergestellt werden, indem man die Bestandteile in bekannter Weise vermischt und bei erhöhten Temperaturen, vorzugsweise bei 200 bis 350°C, in üblichen Vorrichtungen, wie Innenknetern, Extrudern oder Doppelwellenschnecken, schmelzcompoundiert oder schmelzextrudiert. Die Bestandteile können nacheinander oder gleichzeitig gemischt werden. In speziellen Fällen kann es günstig sein, aus den niedermolekularen Additiven und den Magnesium-Aluminium-Silikaten Vormischungen herzustellen.

Weiterer Gegenstand der Erfindung ist also ein Verfahren zur Herstellung der beschriebenen Formmassen durch Mischen der Komponenten bei erhöhter Temperatur.

Die erfindungsgemäßen Formmassen können zur Herstellung von Formkörpern jeder Art, z.B. durch Spritzgießen, verwendet werden. Beispiele für Formkörper sind:

Gehäuseteile (z.B. für Haushaltsgeräte wie Saftpressen, Kaffeemaschinen, Mixer), Abdeckplatten für das Baugewerbe oder Automobilteile. Sie werden außerdem für elektrische Geräte, z.B. für Steckerleisten, eingesetzt, weil sie sehr gute elektrische Eigenschaften haben.

Formkörper können auch durch Tiefziehen aus vorher hergestellten Platten oder Folien hergestellt werden.

Weiterer Gegenstand der Erfindung ist also die Verwendung der beschriebenen Formmassen zur Herstellung von Formkörpern.

Beispiele

Thermoplastische Polymere A

A1 Lineares Bisphenol A-Polycarbonat mit einer relativen Lösungsviskosität von 1,26 bis 1,28 (gemessen in $CH_2Cl_2$ bei 25°C und in einer Konzentration von 0,5 g/100 ml.

A2 Styrol/Acrylnitril-Copolymeriat (Styrol/Acrylnitril-Gew.-Verhältnis 72:28) mit einer Grenzviskosität von 0,55 dl/g (Messung in Dimethylformamid bei 20°C).

A3 Pfropfpolymerisat von 45 Gew.-Teilen Styrol und Acrylnitril im Verhältnis 72:28 auf 55 Gew.-Teile teilchenförmigen vernetzten Polybutadienkautschuk (mittlerer Teilchendurchmesser $d_{50}$ = 0,4 µm), hergestellt durch Emulsionspolymerisation.

A4 Pfropfpolymerisat A3 + Polytetrafluorethylen

Das Tetrafluorethylenpolymerisat wird als koagulierte Mischung aus einer SAN-Pfropfpolymerisat-Emulsion gemäß A3 in Wasser und einer Tetrafluorethylenpolymerisat-Emulsion in Wasser eingesetzt. Das Gewichtsverhältnis Pfropfpolymerisat A3 zum Tetrafluorethylenpolymerisat in der Mischung ist 90 Gew.-% zu 10 Gew.-%. Die Tetrafluorethylenpolymerisat-Emulsion besitzt einen Feststoffgehalt von 60 Gew.-%, die Teilchengröße liegt zwischen 0,05 und 0,5 µm. Die SAN-Pfropfpolymerisat-Emulsion besitzt einen Feststoffgehalt von 34 Gew.-% und eine mittlere Latexteilchengröße von 0,4 µm.

Additive B

Triphenylphosphat (Molekulargewicht 326,3 g/mol)

Silikate C

Ein expandiertes Magnesium-Aluminium-Silikat (Handelsname Vermiculit, Fa. Klein) mit einem Schüttgewicht von 0,11 g/$cm^3$ wurde zunächst mit Wasser behandelt. Dabei wurden sowohl die leichteren Bestandteile (organische Reste) als auch schwere, nicht expandierte Gesteinsreste abgetrennt. Anschließend wurde das Material ca. 30 Minuten in halbkonzentrierter Schwefelsäure gerührt, um die Übergangsmetallverbindungen, die sich bei der Verarbeitung störend auf die thermoplastischen Polymere auswirken, herauszulösen, Das zurückbleibende weiße Pulver (Schüttgewicht: 0,15 g/$cm^3$) wurde gewaschen, getrocknet und mit der vierfachen Menge Triphenylphosphat in der Schmelze intensiv gemischt. Nach Erkalten der Schmelze war das zerkleinerte Material (Vormischung aus Magnesium-Aluminium-Silikat und Triphenylphosphat im Gewichtsverhältnis 1:4) in den Mischungen mit den Polymeren einsatzbereit.

Herstellung und Prüfung der erfindungsgemäßen Formmassen

Die Bestandteile A, B und C wurden auf einem 3 1-Innenkneter bei Temperaturen von 210 bis 250°C aufgeschmolzen und homogenisiert.

Von den Formmassen wurden auf einer Spritzgußmaschine Stäbe der Abmessung 80 x 10 x 4 $mm^3$ (Verarbeitungstemperatur: 260°C) hergestellt, an denen die Kerbschlagzähigkeit (nach Methode ISO 180) bei Raumtemperatur gemessen wurde.

Die Bestimmung der Wärmeformbeständigkeit nach Vicat B erfolgte gemäß DIN 53 460.

Das Brandverhalten der Proben wurde nach UL-Subj. 94 V an Stäben der Abmessung 127 x 12,7 x 1,6 mm gemessen, hergestellt auf einer Spritzgußmaschine bei 280°C.

Der UL 94 V-Test wird wie folgt durchgeführt:

Substanzproben werden zu Stäben der Abmessung 127 x 12,7 x 1,6 mm geformt. Die Stäbe werden vertikal so montiert, daß die Unterseite des Probekörpers sich 305 mm über einem Streifen Verbandstoff befindet. Jeder Probestab wird einzeln mittels zweier aufeinanderfolgender Zündvorgänge von 10 s Dauer entzündet, die Brenneigenschaften nach jedem Zündvorgang werden beobachtet und danach die Probe bewertet. Zum Entzünden der Probe wird ein Bunsenbrenner mit einer 10 mm (3,8 inch) hohen blauen Flamme von Erdgas mit einer Wärmeeinheit von 3,73 x $10^4$ kJ/$m^3$ (1000 BUT per cubic foot) benutzt.

Die UL 94 V-O-Klassifizierung umfaßt die nachstehend beschriebenen Eigenschaften von Materialien, die gemäß der UL 94 V-Vorschrift geprüft wurden. Die Formmassen in dieser Klasse enthalten keine Proben, die länger als 10 s nach jeder Einwirkung der Testflamme brennen; sie zeigen keine Gesamtflammzeit von mehr als 50 s bei der zweimaligen Flammeinwirkung auf jeden Probensatz; sie enthalten keine Proben, die vollständig bis hinaus zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernen der Testflamme glimmen.

Andere UL 94-Klassifizierung bezeichnen Proben, die weniger flammwidrig und selbstverlöschend sind und die flammende Tropfen oder Teilchen abgeben. Diese Klassifizierungen werden mit UL 94 V-1 und V-2 bezeichnet. N. B. heißt "nicht bestanden" und ist die Klassifizierung von Proben, die eine Nachbrennzeit von ≥ 30 s aufweisen.

Eine Zusammenstellung der Eigenschaften der erfindungsgemäßen Formmassen findet sich in nachfolgender Tabelle.

Tabelle 1:

| Zusammensetzung und Eigenschaften der Formmassen | | | | | | | | | |
|---|---|---|---|---|---|---|---|---|---|
| Beispiel | Komponenten | | | | | | UL 94 V 1,6 mm[1]) | $a_k$ [kJ/m$^2$ | Vicat |
| | A1 | A2 | A3 | A4 | B | C | | | VST/$B_{120}$ [C] |
| | [Gew.-Teilet] | | | | | | | | |
| 1(Vgl.) | 65 | 15 | 5 | 3 | 12 | - | V O | 21 | 90 |
| 2 | 65 | 15 | 5 | 3 | - | 10[2]) | V O | 21 | 102 |
| 3(Vgl.) | 65 | 15 | 5 | 3 | 10 | - | V 1 | 22 | 96 |
| 4(Vgl.) | 65 | 15 | 5 | 3 | 8 | - | n.b. | 33 | 102 |

1) Konditionierung der Prüfkörper 7 Tage bei 23°C und 50 %

2) Effektiver Gehalt Triphenylphosphat 8 Gew.-Teile

Aus Tabelle 1 wird deutlich, daß nur das erfindungsgemäße Beispiel 2 eine optimale Eigenschaftskombination aus Brandwidrigkeit, hoher Wärmeformbeständigkeit und guter Kerbschlagzähigkeit bietet. Gleichzeitig zeigt sich auch die Verbesserung der Additiv-Effektivität durch den Zusatz des Magnesium-Aluminium-Silikats. Dabei wird das günstige Brandverhalten bereits bei einem effektiven Triphenylphosphatgehalt von 8 Gew.-Teilen erreicht, die entsprechenden Vergleichsbeispiele 3 und 4 mit 10 bzw. 8 Gew.-Teilen Triphenylphosphat zeigen dagegen ein deutlich schlechteres Brandverhalten.

**Patentansprüche**

**1.** Thermoplastische Formmassen enthaltend

A. 100 Gew.-Teile einer Mischung enthaltend mindestens ein Polymer ausgewählt aus der Gruppe bestehend aus thermoplastischen Polyestem, thermoplastischen Polyamiden, thermoplastischen Polyarylensulfiden und thermoplastischen Polycarbonaten und mindestens ein Polymer ausgewählt aus der Gruppe bestehend aus thermoplastischem Homopolymer und Copolymer von ethylenisch ungesättigten Monomeren,

B. 0,1 bis 40 Gew.-Teile eines Additives mit einem Molekulargewicht kleiner 2000 g/Mol, und

C. 0,1 bis 50 Gew.-Teile eines Magnesium-Aluminium-Silikates mit einem Schüttgewicht 0,5 g/cm 3, einem Teilchendurchmesser von 1 bis 5000 µm, und einem Gehalt an Übergangsmetallverbindungen <5 %, welches bei 700 bis 1100 °C durch das verdampfende Kristallwasser expandiert und danach durch Behandlung mit Säuren erhältlich ist.

**2.** Formmassen gemäß Anspruch 1, wobei das thermoplastische Homo- oder Copolymer ein thermoplastisches Vinylcopolymer aus

50 bis 98 Gew.-% Styrol, α-Methylstyrol, kernsubstituiertem Styrol, Methylmethacrylat oder Mischungen daraus und

50 bis 2 Gew.-% Acrylnitril, Methacrylnitril, Methylmethacrylat, Maleinsäureanhydrid, N-substituiertem Maleinimid und Mischungen daraus, ist.

**3.** Formmassen gemäß Anspruch 1 oder 2, wobei das thermoplastische Homo- oder Copolymer ein Pfropfrolymerisat harzbilender Vinylmonomerer auf einen Kautschuk ist.

**4.** Formmassen gemäß Anspruch 3, worin die Pfropfpolymerisate erhalten werden durch Pfropfpolymerisation von

5 bis 95 Gew.-Teilen, einer Mischung aus

50 bis 95 Gew.-Teilen Styrol, α-Methylstyrol, halogen- oder alkylkernsubstituierten Styrolen, $C_1$-$C_8$-Alkylmethacrylaten, $C_1$-$C_8$-Alkylacrylaten oder Mischungen dieser Verbindungen und

5 bis 50 Gew.-Teilen Acrylnitril, Methacrylnitril, $C_1$-$C_8$-Alkylmethacrylaten, $C_1$-$C_8$-Alkylacrylaten, Maleinsäureanhydrid, $C_1$-$C_4$-alkyl- bzw. N-Phenylsubstituierten Maleinimiden oder Mischungen dieser Verbindungen auf

5 bis 95 Gew.- Teile Kautschuk mit einer Glasübergangstemperatur unter -10°C.

**5.** Formmassen gemäß Anspruch 1 und 4, worin der Kautschuk ein Dienkautschuk, Arcylatkautschuk, Silikonkautschuk oder Ethylen-Propylen- Dien-Kautschuk ist.

**6.** Formmassen gemäß Anspruch 1 bis 5, enthaltend als Komponente A Mischungen aus thermoplastischen Polycarbonaten und Pfropfpolymerisaten harzbildender Vinylmonomerer auf einen Kautschuk.

**7.** Formmassen gemäß Anspruch 1 bis 6, enthaltend als Komponente A Mischungen aus thermoplastischen Polycarbonaten, kautschukfreien und kautschukhaltigen Vinylpolymerisaten.

**8.** Formmassen gemäß Anspruch 1 bis 7, enthaltend als Komponente B Flammschutzmittel.

**9.** Verwendung der Formmassen gemäß Anspruch 1 bis 8 zur Herstellung von Formkörpern.

**10.** Formkörper erhältlich aus Formmassen gemäß Anspruch 1 bis 8.

## Claims

**1.** Thermoplastic moulding compounds containing

A. 100 parts by weight of a mixture containing at least one polymer selected from the group consisting of thermoplastic polyesters, thermoplastic polyamides, thermoplastic polyarylene sulfides and thermoplastic polycarbonates and at least one polymer selected from the group consisting of thermoplastic homopolymers and copolymers of ethylenically unsaturated monomers,

B. 0.1 to 40 parts by weight of an additive with a molecular weight of less than 2000 g/mole, and

C. 0.1 to 50 parts by weight of a magnesium-aluminium silicate with a bulk density < 0.5 g/cm$^3$, a particle diameter of 1 to 5000 µm and a content of transition metal compounds < 5%, which expands at 700° to 1100°C due to the vapourising water of crystallisation and is thereafter obtainable by treatment with acids.

**2.** Moulding compounds according to claim 1, wherein the thermoplastic homopolymer or copolymer is a thermoplastic vinyl copolymer of

50 to 98 wt.% of styrene, α-methylstyrene, nuclear-substituted styrene, methylmethacrylate or mixtures thereof and

50 to 2 wt.% of acrylonitrile, methacrylonitrile, methyl methacrylate, maleic anhydride, N-substituted maleimide and mixtures thereof.

**3.** Moulding compounds according to claim 1 or 2, wherein the thermoplastic homopolymer or copolymer is a graft polymer of resin-forming vinyl monomers on a rubber.

**4.** Moulding compounds according to claim 3, wherein the graft polymers are obtained by graft polymerisation of

5 to 95 parts by weight of a mixture of

50 to 95 parts by weight of styrene, α-methylstyrene, halogen nuclear-substituted or alkyl nuclear-substituted styrenes, $C_1$-$C_8$ alkyl methacrylates, $C_1$-$C_8$ alkyl acrylates or mixtures of these compounds and

5 to 50 parts by weight of acrylonitrile, methacrylonitrile, $C_1$-$C_8$ alkyl methacrylates, $C_1$-$C_8$ alkyl acrylates, maleic anhydride, $C_1$-$C_4$ alkylsubstituted or N-phenyl-substituted maleimides or mixtures of these compounds on

5 to 95 parts by weight of rubber with a glass transition temperature below -10°C.

**5.** Moulding compounds according to claims 1 and 4, wherein the rubber is a diene rubber, acrylate rubber, silicone rubber or ethylene-propylene-diene rubber.

**6.** Moulding compounds according to claims 1 to 5, containing as component A mixtures of thermoplastic polycarbonates and graft polymers of resin-forming vinyl monomers on a rubber.

**7.** Moulding compounds according to claims 1 to 6, containing as component A mixtures of thermoplastic polycarbonates, rubber-free and rubber-containing vinyl polymers.

**8.** Moulding compounds according to claims 1 to 7, containing flameproofing agents as component B.

**9.** Use of the moulding compounds according to claims 1 to 8 for the production of moulded articles.

**10.** Moulded articles obtainable from moulding compounds according to claims 1 to 8.

## Revendications

**1.** Matières moulables thermoplastiques contenant

A. 100 parties en poids d'un mélange contenant au moins un polymère choisi dans le groupe constitué par des polyesters thermoplastiques, des polyamides thermoplastiques, des polysulfures d'arylènes thermoplastiques et des polycarbonates thermoplastiques et au moins un polymère choisi dans le groupe constitué par un homopolymère et un copolymère thermoplastique à base de monomères éthyléniquement insaturés,
B. de 0,1 à 40 parties en poids d'un additif ayant une masse moléculaire inférieure à 2 000 g/mole, et
C. de 0,1 à 50 parties en poids d'un aluminosilicate de magnésium, ayant une masse volumique apparente inférieure à 0,5 g/cm$^3$, un diamètre de particule de 1 à 5 000 μm et une teneur en composés de métaux de transition inférieure à 5 %, qui présente une expansion à une température de 700 à 1 100°C par suite de l'évaporation de l'eau de cristallisation et qui peut être obtenu après cela par traitement avec des acides.

**2.** Matières moulables selon la revendication 1, dans lesquelles l'homo- ou copolymère thermoplastique est un copolymère vinylique thermoplastique comprenant
de 50 à 98% en poids de styrène, α-méthylstyrène, styrène substitué sur le noyau, méthacrylate de méthyle ou leurs mélanges, et
de 50 à 2% en poids d'acrylonitrile, méthacrylonitrile, méthacrylate de méthyle, anhydride maléique, maléinimide N-substitué et leurs mélanges.

**3.** Matières moulables selon la revendication 1 ou la revendication 2, dans lesquelles l'homo- ou copolymère thermoplastique est un polymère à base de monomères vinyliques formant résine greffé sur un caoutchouc.

**4.** Matières moulables selon la revendication 3, dans lesquelles les polymères greffés sont obtenus par polymérisation avec greffage de
5 à 95 parties en poids d'un mélange comprenant
de 50 à 95 parties en poids de styrène, α-méthylstyrène, styrènes substitués sur le noyau par un halogène ou un alkyle, méthacrylates d'alkyles en $C_1$ à $C_8$, acrylates d'alkyles en $C_1$ à $C_8$, ou des mélanges de ces composés, et
de 5 à 50 parties en poids d'acrylonitrile, méthacrylonitrile, méthacrylates d'alkyles en $C_1$ à $C_8$, acrylates d'alkyles en $C_1$ à $C_8$, anhydride maléique, maléinimides substitués par un alkyle en $C_1$ à $C_4$ ou par un N-phényle, ou des mélanges de ces composés, sur
5 à 95 parties en poids de caoutchouc ayant une température de transition vitreuse inférieure à -10°C.

**5.** Matières moulables selon la revendication 1 et la revendication 4, dans lesquelles le caoutchouc est un caoutchouc diène, un caoutchouc acrylate, un caoutchouc silicone ou un caoutchouc éthylène propylène diène.

**6.** Matières moulables selon les revendications 1 à 5, contenant en tant que composant A des mélanges de polycarbonates thermoplastiques et de polymères à base de monomères vinyliques formant résine greffés sur un caoutchouc.

**7.** Matières moulables selon les revendications 1 à 6, contenant en tant que composant A des mélanges de polycarbonates thermoplastiques, de polymères vinyliques dépourvus de caoutchouc et de polymères vinyliques contenant du caoutchouc.

**8.** Matières moulables selon les revendications 1 à 7, contenant en tant que composant B un agent ignifugeant.

**9.** Utilisation des matières moulables selon les revendications 1 à 8 pour fabriquer des articles moulés.

**10.** Articles moulés pouvant être obtenus à partir de matières moulables selon les revendications 1 à 8.